(19) **Europäisches Patentamt / European Patent Office / Office européen des brevets**

(11) **EP 3 353 720 B1**

(12) # FASCICULE DE BREVET EUROPEEN

(45) Date de publication et mention de la délivrance du brevet:
**20.12.2023 Bulletin 2023/51**

(21) Numéro de dépôt: **16775572.7**

(22) Date de dépôt: **22.09.2016**

(51) Classification Internationale des Brevets (IPC):
**G06N 7/01** *(2023.01)*      **G06V 20/58** *(2022.01)*

(52) Classification Coopérative des Brevets (CPC):
**G06V 20/58; G06N 7/01**

(86) Numéro de dépôt international:
**PCT/EP2016/072530**

(87) Numéro de publication internationale:
**WO 2017/050890 (30.03.2017 Gazette 2017/13)**

(54) **PROCEDE ET SYSTEME DE PERCEPTION DE CORPS MATERIELS**

VERFAHREN UND SYSTEM ZUR WAHRNEHMUNG PHYSIKALISCHER KÖRPER

METHOD AND SYSTEM FOR PERCEIVING PHYSICAL BODIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.09.2015 FR 1558919**

(43) Date de publication de la demande:
**01.08.2018 Bulletin 2018/31**

(73) Titulaire: **Commissariat à l'Énergie Atomique et aux Énergies Alternatives 75015 Paris (FR)**

(72) Inventeurs:
• **MOTTIN, Julien**
  **38330 Saint Ismier (FR)**
• **PUSCHINI PASCUAL, Diego**
  **38240 Meylan (FR)**
• **RAKOTOVAO ANDRIAMAHEFA, Tiana**
  **38100 Grenoble (FR)**

(74) Mandataire: **Atout PI Laplace Immeuble "Visium" 22, avenue Aristide Briand 94117 Arcueil Cedex (FR)**

(56) Documents cités:
• **RAKOTOVAO TIANA ET AL: "Real-time power-efficient integration of multi-sensor occupancy grid on many-core", 2015 IEEE INTERNATIONAL WORKSHOP ON ADVANCED ROBOTICS AND ITS SOCIAL IMPACTS (ARSO), IEEE, 30 juin 2015 (2015-06-30), pages 1-6, XP032878066, DOI: 10.1109/ARSO.2015.7428211**
• **N.A.: "Numerical Algorithms and Roundoff Errors", , 28 juillet 2014 (2014-07-28), XP055292485, Extrait de l'Internet: URL:https://web.archive.org/web/20140728133805/http://www.sml.ee.upatras.gr/uploaded files/roundofferror.pdf [extrait le 2016-08-01]**
• **SCHEUNERT U ET AL: "Generalized Grid Framework for multi sensor data fusion", INFORMATION FUSION, 2008 11TH INTERNATIONAL CONFERENCE ON, IEEE, PISCATAWAY, NJ, USA, 30 juin 2008 (2008-06-30), pages 1-7, XP031931930, ISBN: 978-3-8007-3092-6**
• **A ELFES: "Occupancy Grids: A Stochastic Spatial Representation for Active Robot Perception", PROCEEDINGS OF THE SIXTH CONFERENCE ANNUAL CONFERENCE ON UNCERTAINTY IN ARTIFICIAL INTELLIGENCE (UAI-90), 27 juillet 1990 (1990-07-27), pages 136-146, XP055291066, Corvallis, Oregon cité dans la demande**

- TIANA RAKOTOVAO ET AL: "Intelligent Vehicle Perception: Toward the Integration on Embedded Many-core", 6TH WORKSHOP ON PARALLEL PROGRAMMING AND RUN-TIME MANAGEMENT TECHNIQUES FOR MANY-CORE ARCHITECTURES (PARMA), 16 septembre 2015 (2015-09-16), page 2701313, XP055291194, Amsterdam, Netherlands DOI: 10.1145/2701310.2701313>
- Julien Moras: "Grilles de perception évidentielles pour la navigation robotique en milieu urbain", PhD Thesis, 26 septembre 2013 (2013-09-26), pages 1-198, XP055291126, Extrait de l'Internet: URL:https://tel.archives-ouvertes.fr/tel-0 0866300/file/These_Utc_Julien_Moras.pdf [extrait le 2016-07-25]
- PRABHAKAR MISHRA ET AL: "Recursive Goal Seeking Algorithm for reactive navigation in autonomous rover systems", COMPUTATIONAL INTELLIGENCE&COMPUTING RESEARCH (ICCIC), 2012 IEEE INTERNATIONAL CONFERENCE ON, IEEE, 18 December 2012 (2012-12-18), pages 1-6, XP032389997, DOI: 10.1109/ICCIC.2012.6510203 ISBN: 978-1-4673-1342-1
- ASCENSO JOAO ET AL: "Lossless compression of binary image descriptors for visual sensor networks", 2013 18TH INTERNATIONAL CONFERENCE ON DIGITAL SIGNAL PROCESSING (DSP), IEEE, 1 July 2013 (2013-07-01), pages 1-8, XP032498453, ISSN: 1546-1874, DOI: 10.1109/ICDSP.2013.6622692 [retrieved on 2013-10-06]
- ERIK EINHORN ET AL: "Finding the adequate resolution for grid mapping - Cell sizes locally adapting on-the-fly", ROBOTICS AND AUTOMATION (ICRA), 2011 IEEE INTERNATIONAL CONFERENCE ON, IEEE, 9 May 2011 (2011-05-09), pages 1843-1848, XP032033907, DOI: 10.1109/ICRA.2011.5980084 ISBN: 978-1-61284-386-5

**Description**

L'invention porte sur un procédé et un système de perception et d'estimation de la position de corps matériels réalisant, de manière efficace en termes de puissance de calcul et consommation énergétique, une fusion multi-capteurs.

On entend par « corps matériel » toute substance ou objet matériel présentant une individualité et pouvant être détecté et identifié par un capteur approprié. Ainsi, sont considérés des corps matériels les objets inanimés, qu'ils soient naturels ou artificiels, les végétaux, les animaux, les êtres humains, mais aussi des particules liquides ou solides en suspension dans l'air, comme les nuages, voire des masses liquides ou gazeuses.

L'invention s'applique notamment au domaine de la navigation de robots, drones, véhicules autonomes, etc. et plus généralement à celui de la perception.

Avec l'explosion des moyens de calcul intégrables dans un robot, les applications de la robotique se sont multipliées ces dernières années, de la production industrielle à la domotique, de l'exploration spatiale et sous-marine aux drones-jouets grand public. Les tâches réalisées dans les applications robotiques se sont progressivement complexifiées, impliquant de plus en plus souvent pour les robots de pouvoir évoluer dans des environnements inconnus ; cela a rendu de plus en plus important le développement de moyens et techniques de perception, c'est-à-dire permettant la découverte et l'interprétation de l'espace environnant. Une application importante qui utilise la perception en robotique est la navigation, qui consiste à fixer un objectif de destination à un robot, et de le laisser s'y rendre en prenant soin d'éviter les obstacles inconnus et potentiellement mobiles ; le robot a alors la charge de planifier lui même sa trajectoire. Un exemple typique, faisant l'objet de recherches intenses, est la voiture autonome.

Pour permettre une connaissance de tout l'environnement en limitant au maximum les angles morts, et pour pallier un éventuel défaut d'un capteur, on a généralement recours à l'intégration de multiples capteurs. Quand plusieurs capteurs, éventuellement de types différents, couvrent le même espace, il faut pouvoir combiner l'information extraite de chacun d'entre eux : on parle alors de fusion multi-capteurs.

Il existe deux principales familles de techniques de perception : les méthodes géométriques, qui visent à identifier la géométrie des objets de l'espace environnant, et celles à base de grille d'occupation, qui visent à déterminer si un certain emplacement est occupé par un obstacle (plus généralement, par un corps matériel). L'invention relève des techniques à base de grille d'occupation.

Les fondements théoriques des méthodes de perception et de fusion multi-capteurs basées sur des grilles d'occupation sont décrits dans l'article de A. Elfes, « Occupancy grids: a stochastic spatial représentation for active robot perception » (Sixth Conférence on Uncertainty in AI, 1990). Cette publication ne s'intéresse pas à la mise en oeuvre pratique des méthodes, dont une application directe nécessiterait des calculs complexes en virgule flottante.

L'article de K. Konolige « Improved occupancy grids for map building » (Autonomous Robots, 4, 351-367, 1997),celui de J. Adarve et al. « Computing occupancy grids from multiple sensors using linear opinion pools », (Proceedings - IEEE International Conférence on Robotics and Automation, 2012), celui de T. Rakotovao et al. « Real-time power-efficient intégration of multi-sensor occupancy grid on many core » (2015 International Workshop on Advanced Robotics and its Social Impact, 30 juin 2015) et celui de PRABHAKAR et al. "Recursive Goal Seeking Algorithm for reactive navigation in autonomous rover systems" (2015 IEEE International Workshop on Advanced Robotics and Its Social Impacts, 30 juin 2015) décrivent des perfectionnements des techniques à base des grilles d'occupation. Là encore, la mise en oeuvre de ces techniques nécessite un recours massif au calcul en virgule flottante.

Les documents US 2014/035775, FR 2006/050860 et DE 102009007395 décrivent des méthodes et systèmes de perception et de fusion multi-capteurs basées sur des grilles d'occupation, appliquées à la conduite autonome des véhicules terrestres. Toutes ces méthodes nécessitent, pour leur mise en oeuvre, des calculs en virgule flottante.

Or, le recours au calcul en virgule flottante exige des ressources importantes en termes de puissance de calcul, qui sont difficilement compatibles avec les contraintes propres aux systèmes embarqués. Pour mémoire, le format en virgule flottante - défini par la norme IEEE 754 - représente un nombre au moyen de trois éléments : un signe (1 bit), une mantisse (23 ou 52 bits) et un exposant (8 ou 11 bits). Effectuer des calculs en utilisant des nombres représentés en virgule flottante est beaucoup plus complexe (c'est-à-dire nécessite beaucoup plus d'opérations élémentaires) qu'effectuer des calculs sur des entiers. Cela nécessite donc l'utilisation d'un processeur plus rapide et/ou d'un accélérateur matériel dédié, avec un impact défavorable en termes de coût, encombrement et consommation électrique.

On considère, à titre d'exemple, un environnement de 20 m x 50 m discrétisé en 100.000 cellules de 10 cm x 10 cm, et deux capteurs fonctionnant à 25 Hz. Si la fusion de données doit se faire, conformément à l'art antérieur, en mettant en oeuvre la théorie de A. Elfes au moyen de calculs en virgule flottante, la puissance de calcul requise est de l'ordre de 5 - 50 GFlops (milliards d'opérations flottantes par secondes). Si on considère une grille de 150.000 cellules avec 8 capteurs fonctionnant à 50 Hz - hypothèses qui paraissent plus réalistes pour des applications dans le domaine automobile - on obtient un besoin en puissance de calcul de 60 - 600 GFlops.

L'invention vise à procurer une méthode de perception de corps matériels par fusion multi-capteurs nécessitant moins de ressources de calcul et, de ce fait, mieux adaptée à des solutions embarquées. Plus particulièrement elle vise :

- d'une part, à permettre l'utilisation de dispositifs de calcul embarqués simples, ne supportant pas nécessairement les opérations en virgule flottante ;
- d'autre part, même dans le cas où des calculs en virgule flottante seraient supportés, à réduire la consommation énergétique du dispositif de calcul, en évitant ou limitant fortement le recours effectif à de tels calculs. Une telle réduction de consommation est avantageuse par elle-même ; par ailleurs, elle permet de réduire l'échauffement, ce qui améliore la robustesse et la durée de vie du dispositif de calcul, tout en relaxant les contraintes en termes de dissipation thermique.

A titre d'exemple, les inventeurs ont pu constater que l'invention permet de réaliser la fusion sur un système numérique offrant des performances de calcul équivalente à celles disponibles dans les plateformes certifiées ISO26262 ASIL-D utilisées dans le secteur automobile. Cela n'est pas possible en utilisant les techniques de fusion connues de l'art antérieur.

Dans la suite on considérera de manière spécifique l'application à la perception d'obstacles, mais l'invention n'est nullement limitée à ce cas de figure. D'autres applications possibles concernent la détection de nuages ou précipitations, voire de concentrations de polluants, ou bien la distribution et les déplacements de personnes dans un espace public. Dans tout ces cas, il est possible de détecter des corps matériels à l'aide de capteurs, d'en mesurer la distance et d'utiliser les mesures pour calculer une grille d'occupation.

Un objet de l'invention permettant d'atteindre ce but est un procédé de perception de corps matériels comportant les étapes suivantes, mises en oeuvre par un ordinateur ou un circuit électronique numérique dédié :

a) Acquisition d'une pluralité de mesures de distance desdits corps matériels issues d'un ou plusieurs capteurs ;
b) Application, à chaque dite mesure de distance, d'un modèle inverse du capteur correspondant sur une grille d'occupation fournissant une représentation spatiale discrétisée d'un environnement dudit capteur, pour déterminer une probabilité d'occupation par un corps matériel d'un ensemble de cellules de ladite grille d'occupation ; et
c) Construction d'une grille d'occupation consolidée dont chaque cellule présente une probabilité d'occupation calculée par fusion des probabilités d'occupation estimées lors de l'étape b) ;

dans lequel chaque dit modèle inverse de capteur est un modèle discret, associant à chaque cellule de la grille d'occupation correspondante, et pour chaque mesure de distance, une classe de probabilité choisie à l'intérieur d'un même ensemble de cardinalité finie, chaque dite classe de probabilité étant identifiée par un indice entier ; et en ce que, lors de ladite étape c), la probabilité d'occupation de chaque cellule de la grille d'occupation consolidée est déterminée au moyen de calculs entiers effectués sur les indices des classes de probabilités déterminées lors de ladite étape b).

Un autre objet de l'invention est un système de perception de corps matériels comprenant :

- au moins un port d'entrée pour recevoir une pluralité de signaux représentatifs de mesures de distance desdits corps matériels issues d'un ou plusieurs capteurs ;
- un module de traitement de données configuré pour recevoir en entrée lesdits signaux et les utiliser pour construire une grille d'occupation consolidée en appliquant un procédé tel que défini ci-dessus; et
- au moins un port de sortie pour un signal représentatif de ladite grille d'occupation consolidée. La présente invention est uniquement définie par l'objet des revendications, le reste étant constitué d'exemples pour mieux comprendre l'invention.

D'autres caractéristiques, détails et avantages de l'invention ressortiront à la lecture de la description faite en référence aux dessins annexés donnés à titre d'exemple et qui illustrent respectivement :

- La figure 1, la notion de modèle « direct » d'un capteur de distance ;
- La figure 2, la notion de grille d'occupation ;
- La figure 3, la notion de modèle « inverse » d'un capteur de distance ;
- La figure 4, la discrétisation spatial d'un modèle inverse sur une grille d'occupation ;
- Les figures 5A à 5D, une méthode de calcul du modèle inverse d'un capteur sur une grille d'occupation ;
- Les figures 6A à 6D, une méthode de choix de la résolution spatiale optimale d'une grille d'occupation ;
- Les figures 7A et 7B, divers systèmes de classes de probabilité ;
- La figure 8, deux méthodes de quantification d'un modèle inverse d'un capteur sur une grille d'occupation ;
- Les figures 9A et 9B, un système de perception d'obstacles selon un premier mode de réalisation de l'invention ;
- Les figures 10A et 10B, un système de perception d'obstacles selon un deuxième mode de réalisation de l'invention ; et
- La figure 11, un système de perception d'obstacles selon un troisième mode de réalisation de l'invention.

Dans la description détaillée qui suit, il sera fait référence au cas de la perception d'obstacles. Cependant, tout ce qui est décrit s'applique plus généralement à la perception de toute sorte de corps matériels.

Le plus souvent, les capteurs employés pour la navigation renseignent sur la distance des obstacles environnants ; on parle alors de capteurs de distance. Pour rendre compte de la précision d'un capteur, de son éventuelle erreur ou de sa résolution, on introduit un modèle probabiliste. L'idée est qu'une mesure en sortie du capteur n'indique pas nécessairement la distance exacte entre l'obstacle et le capteur, et que par conséquent il convient de raisonner sur la probabilité que l'obstacle soit à une distance donnée connaissant la réponse du capteur.

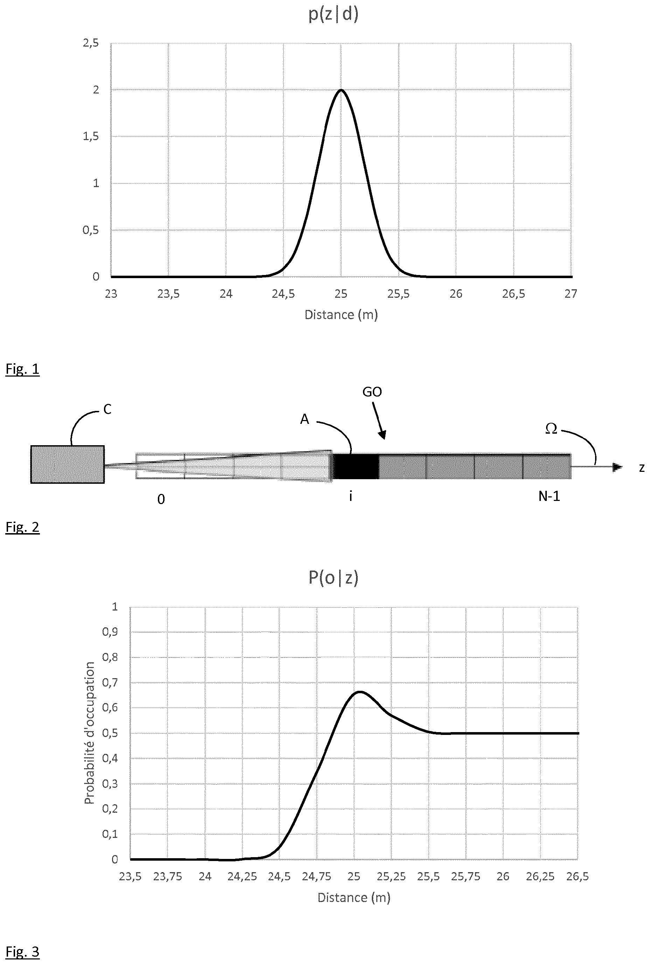

Si on note d la distance réelle entre un obstacle et le capteur, et z la sortie du capteur, on s'intéresse à la fonction de densité de probabilité conditionnelle p(z|d) qui modélise le lien entre la position réelle d'un obstacle et son estimation vue par le capteur (« modèle direct »). La figure 1 présente un exemple de modèle direct d'un capteur ; on considère un espace linéaire de 50 m de long et on suppose qu'un obstacle se trouve à d=25m du capteur. Pour un capteur avec une erreur modélisable par une fonction gaussienne, la réponse z la plus probable sera proche de 25 m, mais d'autres valeurs seront possibles, avec une densité de probabilité définie par la courbe. Dans le cas d'un capteur idéal on aurait p(z|d)=δ(z-d), où δ est une Delta de Dirac, et la mesure serait toujours égale à la vraie distance. Le modèle direct d'un capteur peut être déterminé de manière expérimentale ; typiquement il peut être construit à partir de données fournies par le constructeur (dans le cas gaussien, la valeur de l'écart-type suffit pour caractériser le modèle).

Dans la suite, on notera $\Omega$ un référentiel spatial à une, deux ou trois dimensions ; une grille d'occupation GO est une partition d'un sous-ensemble continu et borné de $\Omega$ en un nombre N de parties, dénommées cellules et désignées par un indice $i \in [0, N-1]$ . On indique par $c_i$ la cellule d'indice i. Sans perte de généralité, on considérera dans la suite une grille d'occupation monodimensionnelle observée par un seul capteur de distance C (ou une pluralité de capteurs co-localisés), l'indice i étant croissant avec l'éloignement du capteur ($c_0$ étant donc la cellule la plus proche du capteur et $c_{N-1}$ la plus éloignée). Cette configuration est illustrée par la figure 2.

Un obstacle A est un sous-ensemble continu borné de $\Omega$. On dit qu'une cellule $c_i$ est occupée par un obstacle A si $A \cap c_i \neq \varnothing$, qu'elle n'est pas occupée par A si $A \cap c_i = \varnothing$. En d'autres termes, si l'obstacle recouvre même partiellement la cellule, on considère qu'elle est occupée. D'autres conventions sont possibles, mais en tout cas une cellule doit être soit libre, soit occupée.

On considère pour chacune des cellules de la grille, l'expérience aléatoire binaire « état » pouvant avoir l'une des deux issues {occupée; vide} consistant à connaître si la cellule contient un obstacle ou non. On notera $e_i$ l'état de la cellule $c_i$, $o_i$ la réalisation $e_i$ = occupée et $v_i$ la réalisation $e_i$ = vide. Dans une grille, on considère que toutes les cellules sont indépendantes, de sorte que

$$\forall \ i,j \in [0, N-1], \ P(o_i \wedge o_j)= P(o_i) \cdot P(o_j) \qquad\qquad (1)$$

où $\wedge$ est l'opérateur logique « et » et P(.) dénote la probabilité d'un évènement (à ne pas confondre avec une densité de probabilité, désignée par un « p » minuscule).

On considère également que la position des obstacles ne peut être connue qu'à l'aide de capteurs de distance incertains, caractérisés par un modèle probabiliste tel que décrit plus haut qui peut s'écrire de manière plus générale $p(z|\vec{x})$, $\vec{x}$ étant la position d'un obstacle (en plusieurs dimensions, il s'agit d'un vecteur, exprimés en coordonnées cartésiennes, sphériques, polaires, etc. et pas d'un simple scalaire). Ces capteurs peuvent être des lasers télémétriques (appelés aussi lidars), des sonars, des radars infrarouges, des caméras à temps de vol, etc.

Une mesure z issue d'un capteur permet de déterminer la probabilité d'occupation $P(o_i|z)$ d'une cellule $c_i$. Pour une mesure z donnée, l'ensemble des probabilités $P(o_i|z) \ \forall \ i \in [0, N-1]$ constitue le modèle inverse du capteur sur la grille. Alors que le modèle direct du capteur renseigne sur la réponse du capteur en fonction du monde physique, le modèle inverse exprime l'impact de la mesure sur la grille d'occupation qui est le modèle du monde physique que l'on adopte, ce qui justifie l'appellation modèle inverse.

La figure 3 présente un exemple typique de modèle inverse d'un capteur de distance, dans un cas où z=25m. On peut vérifier que la probabilité d'occupation est quasi-nulle pour les cellules qui se trouvent à une distance inférieure à 24,25 m du capteur et atteint un pic pour une distance de 25 m (correspondant à la mesure fournie par le capteur). Au-delà de 25 m, la probabilité d'occupation diminue jusqu'à se stabiliser à une valeur de 0,5, indicative d'une méconnaissance totale de l'état d'occupation des cellules qui, étant situées au-delà de l'obstacle, sont masquées par ce dernier et donc inaccessibles au capteur.

Conformément à l'usage qui prévaut dans la littérature, la figure 3 représente le modèle inverse au moyen d'une courbe lissée. Une représentation plus correcte serait de n'afficher que les points correspondant aux limites des cellules de la grille : en effet, on ne peut pas distinguer une cellule « partiellement » occupée d'une autre qui le serait « totalement », dans tous les cas la distance à l'obstacle sera estimée comme étant la distance à la cellule correspondante. C'est là l'erreur spatiale introduite par la grille.

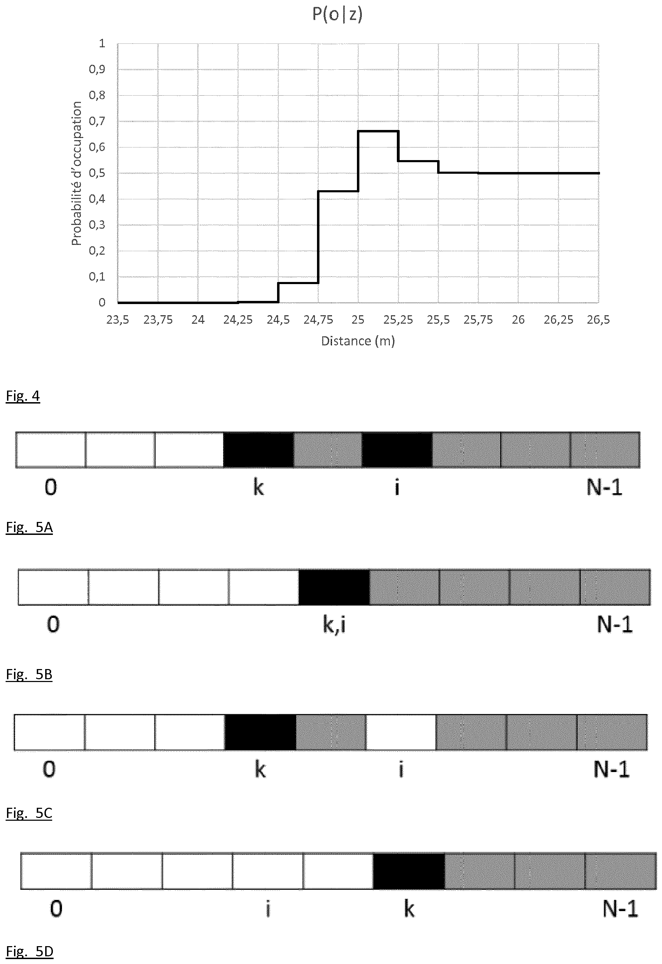

Une version plus juste du modèle inverse de la figure 3, tenant compte de cette discrétisation spatiale induite par la grille est présentée sur la figure 4.

Il convient de souligner que les notions de « occupation » et de « distance de l'obstacle » ne sont pas tout à fait équivalentes. En effet, dire qu'un obstacle est à une distance z de capteur ne signifie pas seulement qu'une certaine cellule est occupée, mais aussi que toutes les autres cellules de la grille plus proches du capteur sont libres (autrement, le premier obstacle aurait été vu à une distance inférieure à z). Sur la figure 2 précitée, l'obstacle A se trouve dans la cellule d'indice i (en noir) ; les cellules d'indice inférieur à i sont représentées en blanc pour indiquer qu'elles sont libres, celles d'indice supérieur à i le sont en gris pour indiquer que leur état d'occupation est inconnu.

Si on tient compte de la notion de capteur incertain caractérisé par son modèle (direct) $p(z|\vec{x})$ et que l'on note $d_i$ la distance de la cellule $c_i$ par rapport au point de mesure et $\vec{x_i}$ le point de la cellule $c_i$ le plus proche dudit point de mesure, on a :

$$\forall i < N, p(z|\vec{x_i}) = p(z|v_0 \wedge \ldots \wedge v_{i-1} \wedge o_i) \quad (2)$$

L'équation (2) indique que le modèle du capteur évalué en un point qui est à la frontière d'une cellule de la grille ($x_i$) est égal à la densité de probabilité de réponse du capteur pour une configuration de grille correspondante, à savoir une grille où les cellules les plus proches que la cellule i sont vides, la cellule i est occupée, et les états d'occupation des cellules plus éloignées que la cellule i ne sont pas déterminées. C'est en exploitant cette information que A. Elfes, dans son article précité, a proposé un procédé de construction du modèle inverse du capteur. Une explication de ce procédé est donnée ci-dessous.

Le théorème de Bayes permet d'exprimer le modèle inverse d'un capteur $P(o_i|z)$ de la manière suivante :

$$P(o_i|z) = \frac{p(z|o_i)P(o_i)}{p(z)}$$

$$= \frac{p(z|o_i)P(o_i)}{p(z|o_i)P(o_i) + p(z|v_i)P(v_i)} \quad (3).$$

où $P(o_i)$ et $P(v_i)$ désignent les probabilités a priori (c'est-à-dire sans connaitre la position des obstacles, ni la sortie du capteur) que la cellule $c_i$ soit occupée ou libre, respectivement. Dans la suite on fera l'hypothèse $P(o_i) = P(v_i) = 1/2$, mais une généralisation ne pose pas de difficulté théorique fondamentale.

On obtient alors :

$$P(o_i|z) = \frac{p(z|o_i)}{p(z|o_i) + p(z|v_i)} \quad (4)$$

Le calcul des termes $p(z|o_i)$ et $p(z|v_i)$ peut se faire en utilisant le théorème de Kolmogorov sur toutes les configurations possibles de la grille. Une configuration est formée par un N-uplet { $e_0$, $e_1$ … $e_{N-1}$} où $e_i \in \{o_i, v_i\}$ ; une grille de N cellules a $2^N$ configurations possibles.

Pour le terme $p(z|o_i)$ les configurations de grille possibles sont de la forme $$G_{o_i}^k = (e_0, \ldots o_i, \ldots e_{N-1})$$ où le la cellule i est occupée ; il y a $2^{N-1}$ de telles grilles. Pour le terme $p(z|v_i)$ les configurations de grille possibles sont de la forme $$G_{v_i}^k = (e_0, \ldots v_i, \ldots e_{N-1})$$ où la cellule $c_i$ est vide ; il y a $2^{N-1}$ de telles grilles.

On peut donc écrire :

$$p(z|o_i) = \sum_{G_k^{o_i}} p(z|G_k^{o_i})P(G_k^{o_i})$$

(5a)

$$p(z|v_i) = \sum_{G_k^{v_i}} p(z|G_k^{v_i})P(G_k^{v_i})$$

(5b)

Les termes $P(G_k^{o_i})$ et $P(G_k^{v_i})$ valent $1/2^{N-1}$. En utilisant l'équation (2) liant l'occupation et la distance mesurée, on peut déterminer, à partir d'une configuration de grille $G_{e_i}^k$, la position $\vec{x_l}$ telle que $p(z|G_k^{e_i}) = p(z|\vec{x_k})$. Cette position est celle de la cellule occupée de la configuration $G_{e_i}^k$. la plus proche de l'observateur. Les équations (5a) et (5b) peuvent donc se réécrire :

$$p(z|e_i) = \sum_{G_k^{e_i}} \frac{p(z|\vec{x_k})}{2^{N-1}}$$

(6)

dont les termes peuvent être calculés directement à partir du modèle direct du capteur. En réinjectant (6) dans (4) ont peut donc calculer, en principe, le modèle inverse du capteur sur la grille d'occupation considérée.

La limitation principale de cette méthode provient de l'explosion exponentielle du nombre de termes dans la somme de l'équation (6), rendant pratiquement impossible le calcul de la somme. En effet, dans l'art antérieur, on utilise généralement des expressions analytiques du modèle inverse, en renonçant à l'exprimer directement en fonction de $p(z|o_i)$. Cela implique la perte du lien avec le modèle directe, qui est le seul à être directement accessible par l'expérience, et donc de la capacité de mesurer l'erreur introduit par la modélisation.

Un premier apport de la présente invention est une méthode simplifiée pour calculer le modèle inverse - linéaire en N au lieu d'être exponentielle - sans introduire d'approximation par rapport à l'utilisation des équations (6) et (4). Dans la suite on considérera, dans un but de simplification de l'exposé mais sans perte de généralité, le cas d'une grille d'occupation monodimensionnelle, où la position d'un obstacle est représentée par une variable scalaire x et pour laquelle (6) peut s'écrire :

$$p(z|e_i) = \sum_{G_k^{e_i}} \frac{p(z|x_k)}{2^{N-1}}$$

(7)

Comme on considère une grille monodimensionnelle à N cellules, $x_k$ peut prendre seulement la valeur de position de l'une des cellules $c_j$ avec $j \in [0; N - 1]$. Ainsi, les termes de la somme (7) ne peuvent prendre que N valeurs différentes. En factorisant toutes les grilles donnant la même valeur de $p(z|x_k)$, on peut donc ramener l'équation (7) à une somme de N termes seulement - au lieu de $2^{N-1}$ .. La complexité du calcul passe d'exponentielle à linéaire.

On commence par considérer le cas $e_i = o_i$. On fixe $c_i$ dans son état occupé et on fixe la distance du premier obstacle comme étant celle de la cellule $c_k$, de sorte que cette distance est effectivement $x_k$. On cherche donc le nombre de grilles qui sont telles que le premier obstacle est vu à la position $x_k$ sachant que la cellule ci est occupée. Trois cas de figure sont envisageables :

1. k < i : la cellule k est occupée (1 cellule), les cellules $c_j$ avec j < k sont vides (k cellules), la cellule $c_i$ est occupée (1 cellule), les autres sont soit occupées, soit vides. Cela est illustré sur la figure 5A, où une cellule libre est représentée en blanc, une cellule occupée en noir et une cellule qui se trouve dans un état indéterminé en gris. On a donc k+2 cellules dans un état fixe et N-k-2 cellules dans un état indéterminé ; il y a $2^{N-k-2}$ telles grilles.

2. k = i (cf. figure 5B) : la cellule k = i est occupée (1 cellule), les cellules $c_j$ avec j < i sont vides (i cellules), les autres sont soit occupées, soit vides. Ce qui fait 1+i cellules dont l'état est fixé et N-i-1 cellules dont l'état est indéterminé. Il existe en tout $2^{N-i-1}$ telles grilles.

3. k > i : cette configuration est impossible, car si k était strictement supérieur à i, le plus proche obstacle serait vu en $x_i$ et non en $x_k$.

L'équation (7) dans le cas $e_i=o_i$ s'écrit donc :

$$p(z|o_i) = \sum_{k=0}^{i-1} \frac{p(z|x_k)}{2^{k+1}} + \frac{p(z|x_i)}{2^i} \qquad (8)$$

On peut répéter le même raisonnement pour le cas $e_i=v_i$. Dans ce cas aussi on peut distinguer trois possibilités :

1. k<i - situation représentée sur la figure 5C : il y a $2^{N-k-2}$ cellules qui vérifient cette condition ;
2. k=i : situation impossible ;
3. k>i - situation représentée sur la figure 5D : il y a $2^{N-k-2}$ cellules qui vérifient cette condition.

L'équation (7) dans le cas $e_i=v_i$ s'écrit donc :

$$p(z|v_i) = \sum_{k=0}^{i-1} \frac{p(z|x_k)}{2^{k+1}} + \sum_{k=i+1}^{N-1} \frac{p(z|x_k)}{2^k} \qquad (9).$$

En injectant les expressions (8) et (9) dans (4), on parvient ainsi à construire le modèle inverse de capteur monodimensionnel sur la grille d'occupation à partir de son modèle direct avec une complexité linéaire par rapport à la taille N de la grille :

$$P(o_i|z) = \frac{\sum_{k=0}^{i-1} \frac{p(z|x_k)}{2^{k+1}} + \frac{p(z|x_i)}{2^i}}{\sum_{k=0}^{N-1} \frac{p(z|x_k)}{2^k}} \qquad (10)$$

De telles simplifications sont également possibles en plus grande dimension, en utilisant notamment des coordonnées polaires ou sphériques.

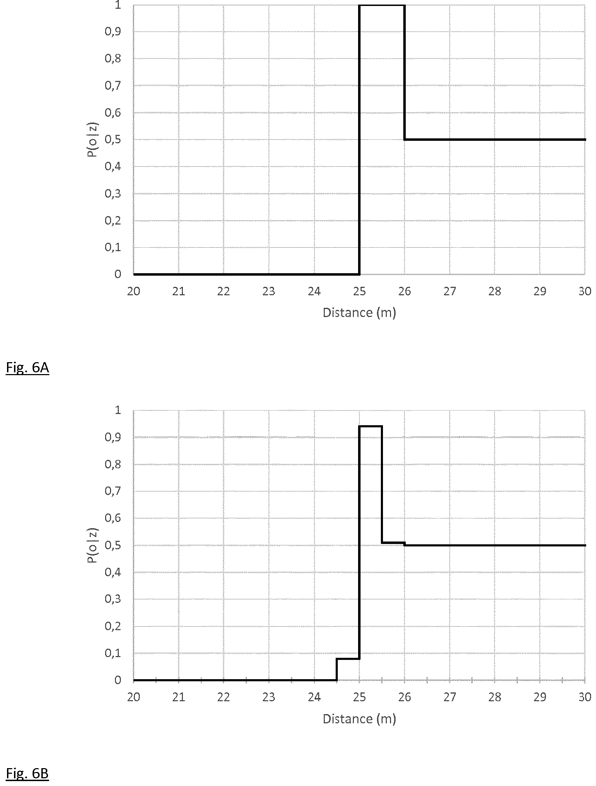

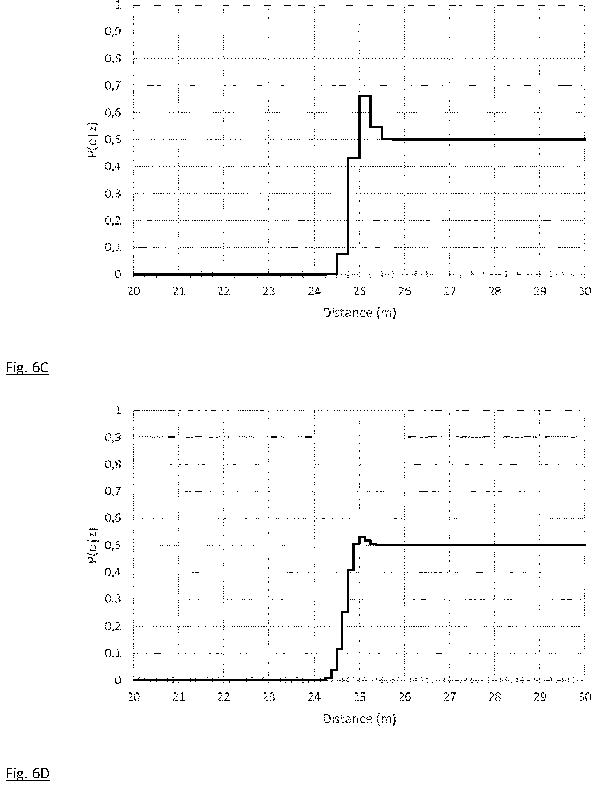

La construction du modèle inverse dépend fortement de la définition de la grille. Il est donc intéressant d'étudier quel est l'impact d'une variation de résolution spatiale sur le modèle inverse. Les figures 6A - 6D montrent les modèles inverses d'un même capteur sur quatre grilles de résolution spatiales différentes : 1 m (6A), 50 cm (6B), 25 cm (6C), 12,5 cm (6D). On peut remarquer que quand la résolution augmente (le pas de la grille diminue), le maximum du modèle inverse diminue et tend vers 0,5. En effet, on ne doit pas s'attendre de pouvoir connaître la position d'un obstacle avec une précision supérieure à celle du capteur. A contrario, si on se contente de connaître l'occupation avec une précision bien inférieure à celle du capteur, on pourra déterminer avec une grande certitude la présence ou l'absence d'un obstacle (cas de la figure 6A, où le maximum du modèle inverse vaut 0,999994). Ces considérations permettent d'optimiser la résolution spatiale de la grille : on peut en effet réaliser une exploration permettant de déterminer la résolution maximale de la grille pour laquelle le maximum du modèle inverse reste supérieur à un seuil (strictement supérieur à 0,5 et strictement inférieur à 1) considéré « significatif ».

Il est intéressant de noter que le lien existant entre la précision du capteur et la résolution de la grille n'est apparent que si on calcule le modèle inverse à partir du modèle direct (équations 7 - 10). Ce lien est perdu si on se contente d'une expression analytique approchée du modèle inverse, comme dans l'art antérieur ; cela constitue un avantage supplémentaire de l'approche proposée par l'invention.

A partir des modèles inverses de deux capteurs sur une même grille d'occupation, la fusion des données des deux capteurs s'effectue à l'aide de l'équation suivante :

$$P(o_i|z_1 \wedge z_2) = \frac{P(o_i|z_1)P(o_i|z_2)}{P(o_i|z_1)P(o_i|z_2) + (1 - P(o_i|z_1))(1 - P(o_i|z_2))}$$

$$(11)$$

où $z_1$ et $z_2$ sont les mesures fournies par les deux capteurs (la généralisation à plus de deux capteurs est immédiate - il suffit de considérer $P(o_i|z_1 \wedge z_2)$ comme le modèle inverse d'un capteur « virtuel » et le fusionner avec la mesure fournie par un troisième capteur, et ainsi de suite. L'équation (11) n'est valable que si $P(o_i)= P(v_i)=1/2$, mais sa généralisation à d'autres hypothèses est triviale.

Ce calcul, en virgule flottante, doit être effectué pour chaque cellule de la grille et à une fréquence au moins aussi rapide que la fréquence d'acquisition des capteurs - ce qui nécessite une puissance de calcul importante.

Un deuxième apport de l'invention consiste en un procédé pour la fusion bayésienne des données issues de multiples capteurs dans une grille d'occupation sans calcul en virgule flottante, ce qui permet de réduire considérablement la complexité des calculs nécessaires à la construction de grilles d'occupation et ainsi d'adresser des domaines applicatifs plus variés, notamment ceux pour lesquels la capacité de calcul embarqué est très limitée.

Cet aspect de l'invention repose sur la représentation de la probabilité sur l'intervalle [0 ; 1] de manière discrétisée, par l'intermédiaire de classes de probabilités identifiées par des indices entiers.

Dans ce qui suit, on appellera « système de classes de probabilités » $S = \{p_n, n \in \mathbb{Z}\}$ un sous-ensemble dénombrable de [0; 1], dont les éléments $p_n$ peuvent donc être caractérisés par un indice entier relatif « n ». Si on appelle « F » la fonction de fusion des données exprimée par l'équation (11) ci-dessus, on peut écrire :

$$F(p_1, p_2) = \frac{p_1 p_2}{p_1 p_2 + (1 - p_1)(1 - p_2)}$$

$$(12).$$

Un cas particulièrement intéressant est celui d'un système de classes tel que le résultat de la fusion de deux classes de probabilités du système appartient également au système ; formellement : $\forall p_i, p_j \in S, F(p_1, p_2) \in S$. On parle alors d'un système de classes « sans erreur », car la fusion n'introduit pas d'erreur ou d'approximation. Il est donc possible de repérer les valeurs de probabilité par les indices des classes correspondantes, et le résultat d'une fusion est également identifié par un indice. Le problème de la fusion revient alors à déterminer une fonction appropriée $F_d$ qui, à deux indices entiers, associe un autre indice entier. Formellement :

$$\forall (k, l) \in \mathbb{Z}^2, \exists i \in \mathbb{Z} : F(p_k, p_l) = p_i$$

et on note $F_d(k, l) = i$.

Le calcul de $F_d(k,l)$ ne requiert que la connaissance des indices k et l et de l'arithmétique d'indice entier ; aucun calcul en virgule flottante n'est nécessaire pour le calcul de la fusion des informations $p_k$ et $p_l$. De plus, si le système de classes est considéré, l'indice obtenu à l'aide de $F_d(k,l)$ désigne une valeur de probabilité strictement identique à celle obtenue - en utilisant des nombres en virgule flottante - en appliquant l'équation (11). La méthode permet ainsi la fusion des classes de probabilité sans erreur par rapport à un calcul flottant.

Il est possible de généraliser cette approche en considérant le cas où les système S est construit comme étant la réunion de plusieurs sous-systèmes de classes qui, individuellement, sont sans erreur. Dans ce cas il est possible que le système S considéré dans sa globalité ne soit pas sans erreur. Il est donc nécessaire d'introduire une étape d'approximation dans la définition de la fonction de fusion $F_d$ :

$$\forall (k, l) \in \mathbb{Z}^2, \exists\, i \in \mathbb{Z} : F(p_k, p_l) = p \text{ et } p_i \leq p < p_{i+1}$$

On peut ensuite arrondir par défaut, par excès ou au plus proche, et de chosir donc $F_d(k,l)=i$ ou $F_d(k,l)=i+1$ suivant le modèle d'approximation. L'erreur reste toutefois bornée par la largeur du support du système de classes.

Un exemple trivial de système sans erreur est S={1/2, 1}. Tout système de classes comprenant des probabilités différentes de 1/2, 1 et 0 comprend nécessairement une infinité d'éléments. En pratique, pour des raisons évidentes de mise en oeuvre, on considérera uniquement des systèmes de classes de probabilités de cardinalité finie. Toutefois, étant donné que les capteurs sont en nombre fini et que leurs sorties (quantifiées et numérisées) ne peuvent prendre qu'un nombre fini de valeurs, on démontre qu'il est possible de réaliser des fusions « sans erreurs » même à partir de systèmes de classes de probabilités de cardinalité finie.

Un premier exemple d'intérêt applicatif concerne un système de classes de probabilités formé par la réunion des deux sous-systèmes de classes sans erreur suivants :

$$S_k^- = \left\{ \frac{1}{2 - k \cdot n}, n \leq 0 \right\} \tag{13}$$

$$S_k^+ = \left\{ \frac{k \cdot n + 1}{k \cdot n + 2}, n \geq 0 \right\} \tag{14}$$

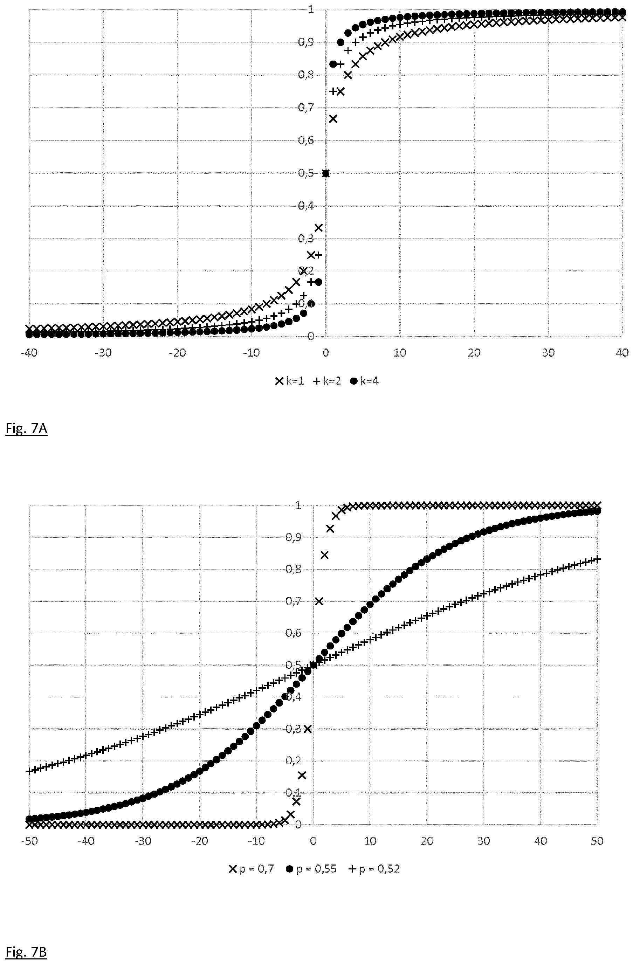

où k est un entier positif ( $k \in \mathbb{N}^*$ ) ainsi que le système $S_k = S_k^+ \cup S_k^-$ , qui n'est pas sans erreur. La figure 7A illustre ces systèmes de classes de probabilités dans les cas k=1, k=2 et k=4. On peut observer que les systèmes $S_k$ quantifient l'intervalle [0, 1] de manière non uniforme, avec un pas de quantification grand près de la valeur 0,5 et de plus en plus petit lorsqu'on s'approche des valeurs 0 et 1. Cela est doublement avantageux, car :

- une probabilité de 0,5 indique une occupation incertaine ; il n'est donc pas utile d'être très précis autour de cette valeur ; par contre, la précision est utile à proximité des valeurs extrêmes 0 et 1 ;
- au-delà d'une certaine valeur de |n|, les différentes valeurs des classes de probabilité $p_n$ deviennent extrêmement proches entre elles ; l'erreur introduite en tronquant les systèmes de classes est donc négligeable.

Il est préférable de choisir k de faible valeur (par exemple non supérieur à 5) pour éviter que seules les probabilités très proches de 0 ou de 1 soient échantillonnées finement. En fait, plus le capteur est précis, plus la valeur de k pourra être élevée.

Le modèle inverse de la figure 4 était discrétisé spatialement, mais la probabilité d'occupation de chaque cellule pouvait prendre n'importe quelle valeur comprise dans l'intervalle [0,1]. A présent, les valeurs de probabilité sont elles-mêmes discrétisées, ou quantifiées, pour appartenir au système de classes $S_k$ (plus généralement, à un système de classes S). Ainsi, conformément à l'invention, il est nécessaire d'approcher les valeurs de probabilité du modèle inverse de la figure 4 par des éléments d'un système de classes S.

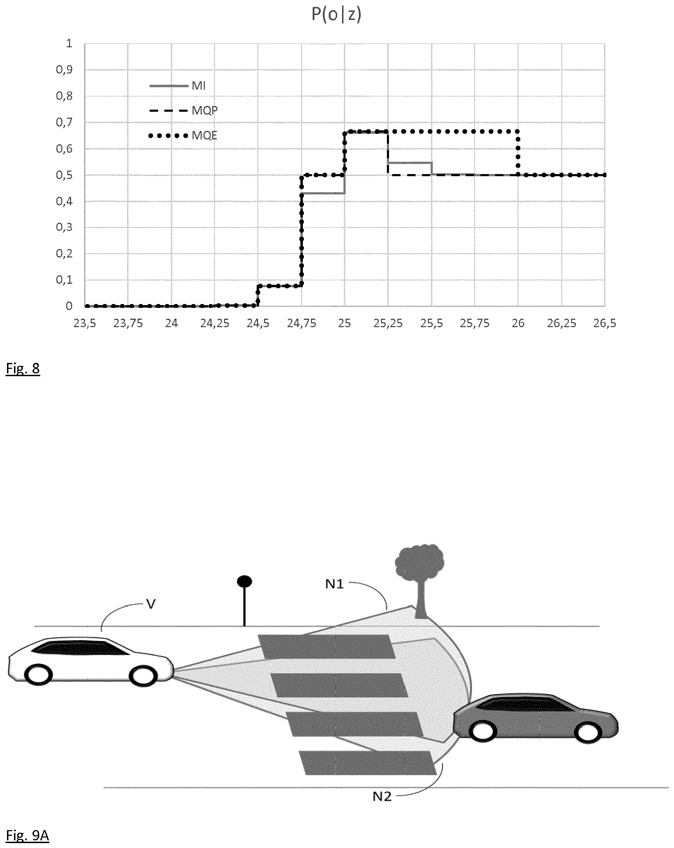

Une première possibilité consiste à remplacer les valeurs du modèle inverse - représenté par la courbe MI sur la figure 8 - par les éléments de S les plus proches, de manière à minimiser l'erreur de quantification. Le résultat, dans le cas où le système de classes de probabilité est $S_1$ ($S_k$ avec k=1) est représenté par la courbe MQP sur cette même figure 8. On voit que cette approche peut conduire à sous-estimer la probabilité d'occupation d'une cellule, ce qui peut ne pas être acceptable dans une application de détection d'obstacles. Une alternative consiste à approcher les valeurs du modèle inverse théorique par le plus petit majorant du système de classes S (courbe MQE sur la figure 8, toujours dans le cas du système $S_k$). Ainsi la probabilité d'occupation n'est jamais sous-estimée, ce qui peut être un avantage pour la détection d'obstacles. Dans d'autres applications, comme le comptage de personne, ce type d'approximation peut en revanche conduire à la génération de faux-positifs.

On remarque que, quel que soit le type d'approximation considéré, le système inverse discrétisé spatialement (courbe MI sur la figure 8) prend un nombre de valeurs qui est très faible (7 dans l'exemple de la figure 8, tout au plus 18 si on prenait la résolution maximale de la grille, fonction de l'erreur du capteur). Par conséquent, le nombre d'éléments du système S nécessaires pour l'approcher le modèle inverse est également très faible. On peut donc se limiter à considérer un sous-ensemble fini, et de petite taille, du système de classes $S_k$ dont la cardinalité est, en principe, infinie et dénombrable.

Il a été montré plus haut, en référence aux figures 6A - 6D, que - pour un capteur donné - plus la grille d'occupation spatiale est résolue, plus la valeur maximale du modèle inverse est proche de 0,5. Or, si on se limite à des valeurs de probabilité appartenant à un système de classes S, il existe une classe de probabilité $p_{min}$ qui correspond à la plus petite valeur supérieure à 0,5. Dans le cas de $S_1$, on a $p_{min}=p_i=2/3$ ; plus généralement, pour un système de classes $S_k$, $p_{min}=p_i=(k+1)/(k+2)$. La résolution optimale de la grille d'occupation est donc celle pour laquelle la valeur maximale du modèle inverse est égale à $p_{min}$. Toute diminution ultérieure du pas de la grille augmente la charge de calcul sans apporter aucun gain en termes d'information.

Comme cela a été expliqué plus haut, l'intérêt d'utiliser des systèmes de classes de probabilité du type de $S_k$ est que la fusion des données ne nécessite que des calculs sur les indices « n », et donc sur des entiers.

On considère d'abord le cas de $S_k^-$. Soient i, $j < 0 \in \mathbb{Z}$. En remplaçant (13) dans (12) et en effectuant des simples calculs on trouve :

$$F(p_i, p_j) = p_{i+j-k \cdot i \cdot j} \qquad (15).$$

On considère d'abord le cas de $S_k^+$. Soient i, $j > 0 \in \mathbb{Z}$. En remplaçant (14) dans (12) et en effectuant des simples calculs on trouve :

$$F(p_i, p_j) = p_{i+j+k \cdot i \cdot j} \qquad (16).$$

Si i=0, la probabilité $p_i$ est égale à 0,5 et alors $F(p_i, p_j) = p_j$ : un capteur pour lequel la probabilité d'occupation est 0,5 n'apporte aucune information.

Reste le cas où l'une des probabilités à fusionner est inférieure à 0,5 - et relève donc de la classe $S_k^-$ - et l'autre est supérieure à 0,5 - et relève donc de la classe $S_k^+$. Dans ce cas on a :

*

$$F(p_i, p_j) = p_n, n = \frac{i+j}{1+k \cdot j} \text{ si i<0, j>0 et |i|≥|j| ;} \qquad (17)$$

*

$$F(p_i, p_j) = p_n, n = \frac{i+j}{1-k \cdot i} \text{ si i<0, j>0 et |i|≤|j|.} \qquad (18)$$

Le calcul des fractions entières ne donne pas, en général, un résultat entier. On peut cependant mettre en oeuvre une opération de division entière « ÷ », fournissant un résultat entier - l'indice d'une classe de probabilité dons la valeur est proche du résultat réel. L'équation ci-dessus devient alors :

*

$$F(p_i, p_j) = p_{(i+j)÷(1+k \cdot j)} \text{ si i<0, j>0 et |i|≥|j| ;} \qquad (19)$$

*

$$F(p_i, p_j) = p_{(i+j)÷(1-k \cdot i)} \text{ si i<0, j>0 et |i|≤|j|.} \qquad (20)$$

L'erreur introduit par l'application des équations (19) et (20) est borné par la distance maximale entre deux classes successives. Les deux classes de distance maximale sont $p_0$ et $p_1$, par conséquent l'erreur maximale est donnée par

$$E(k)=p_1-p_0=k/(2k+4) \tag{21}$$

On remarque que la situation considérée ici signifie que les deux capteurs donnent des informations contradictoires ; dans certains cas, on préfèrera ne pas appliquer les équations (19), (20), mais une règle de gestion des conflits, pouvant être connue de l'art antérieur. Par exemple, notamment lorsqu'il s'agit d'éviter des collisions potentiellement dangereuses, il peut être préférable de prendre l'estimation de probabilité d'occupation la plus élevée ; dans ce cas on a donc simplement :

$$F\left(p_i, p_j\right) = \max\left(p_i, p_j\right) \tag{22}$$

Un autre exemple de système de classes présentant un intérêt applicatif peut être défini par récurrence.
Soit p une probabilité d'occupation strictement comprise entre 0,5 et 1 : 0,5<p<1. On définit alors par récurrence la suite $p_n$ de la façon suivante :

$$p_0=0{,}5 \; ;$$
$$p_1=p \; ;$$
$$p_2=F(p,p);$$
$$p_3=F(p_2,p);$$
$$\ldots$$
$$p_{n+1}=F(p_n,p) \tag{23}$$

On étend ensuite la définition de $p_n$ aux valeurs entières négatives de n de la façon suivante :

$$p_0=0{,}5 \; ;$$
$$p_{-1}=1\text{-}p \; ;$$
$$p_{-2}=F(p_{-1}, p_{-1});$$
$$p_{-3}=F(p_{-2}, p_{-1});$$
$$\ldots$$
$$p_{n-1}=F(p_n, p_{-1}) \tag{24}$$

On définit ensuite les deux systèmes de classes suivants, de paramètre $p \in \; ]0{,}5, 1[$ :

$$G_p^+ = \{(p_n), n \geq 0\} \tag{25}$$

$$G_p^- = \{(p_n), n \leq 0\} \tag{26}$$

où $p_n$ est défini par (22) ou (23), selon que n soit positif ou négatif. Par constructions, les classes $G_p^-$ et $G_p^+$ sont sans erreur. En effet, si on note $f_p$ la fonction à une variable qui, à une probabilité x, associe $f_p(x)=F(x,p)$, on voit

immédiatement que $\forall i \in \mathbb{N}^*, \; p_i = f_p^i(p)$ , où l'exposant « i » signifie « composé i fois avec lui-même ». Par conséquent :

$$F(p_i, p_j) = F\left(f_p^i(p), f_p^j(p)\right) = f_p^{i+j}(p) = p_{i+j} \qquad (27)$$

On en déduit que $G_p^+$ est sans erreur. En remarquant que $\forall x, y \in [0,1]$ on a F(1-x, 1-y)=1-F(x,y), on peut appliquer le même raisonnement à $G_p^-$ , qui est donc aussi sans erreur.

En posant $G_p = G_p^- \cup G_p^+$ , on obtient un nouveau système de classes pouvant être utilisé dans une méthode de fusion de données selon l'invention. Ce qui est remarquable est que - contrairement au système $S_k$ défini plus haut, $G_p$ est sans erreur sur tout son ensemble de définition.

L'équation (27) permet de trouver la formule de fusion des classes dans $G_p$ :

$$F_d(i, j) = i + j \; \forall \, i, j \; \in \mathbb{Z} \qquad (28)$$

De plus, le paramètre p permet de contrôler finement l'erreur introduite par la quantification ; en effet si on pose p=1/2 + ε on a :

$$E(p) = p_1 - p_0 = \varepsilon \qquad (29)$$

Le système $G_p$ est très intéressant car il permet de réaliser la fusion entière de la manière la plus simple possible (une addition entière) et sans erreur, et de maîtriser l'erreur introduite par la quantification par le choix du paramètre p.

La figure 7B illustre le système $G_p$ pour trois valeurs du paramètre p : 0,52 ; 0,55 et 0,7.

La figure 9A illustre l'application de l'invention à un véhicule terrestre V équipé d'un capteur de distance C, par exemple un télémètre laser à balayage mécanique (LIDAR). Ce capteur est configuré pour effectuer une pluralité de balayages unidimensionnels de l'espace à l'avant du véhicule, chaque balayage définissant une « nappe » d'acquisition. De préférence, on réalise une pluralité de nappes N1, N2... à des hauteurs différentes. Lors de chaque balayage, le capteur produit un vecteur de mesures z, dont chacune est indicative de la présence d'un obstacle - piéton, autre véhicule, arbre sur le bord de la route ... - dans une direction respective et de sa distance (par exemple, lorsque z prend sa valeur maximale, cela signifie qu'il n'y a pas d'obstacle détecté dans la limite de portée du capteur). En variante, une pluralité de capteurs co-localisés (c'est-à-dire ayant le même point d'origine pour la mesure de la distance) peut permettre de réaliser de manière simultanée une pluralité de nappes d'acquisition.

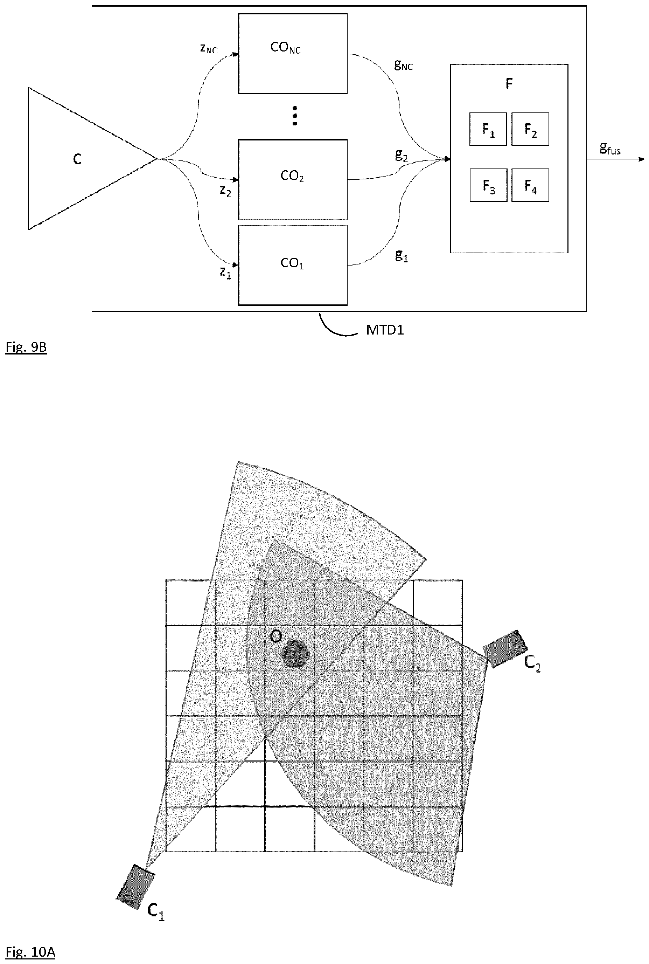

La figure 9B illustre un système de perception d'obstacles adapté à cette application. Ce système comprend ledit capteur C (ou un ensemble de capteurs colocalisés) et un module de traitement de données MTD1 recevant en entrée les vecteurs de mesures correspondant à chaque nappe d'acquisition du capteur et fournissant à sa sortie un signal (typiquement un vecteur d'entiers) représentatif d'une grille d'occupation obtenue par fusion des données de ces nappes d'acquisition.

Dans le mode de réalisation de la figure 9B, le module de traitement de données MTD1 comprend une pluralité de blocs matériels de calcul de probabilités d'occupation, $CO_1...CO_{NC}$ et un bloc matériel de calcul F dit de consolidation ou de fusion. Chaque bloc de calcul de probabilités d'occupation $CO_k$ comprend une mémoire stockant, sous la forme d'une table de correspondance, un modèle inverse de la nappe d'indice k du capteur C, discrétisé au moyen d'un système de classes de probabilité, par exemple $S_1$. On parle ici de « modèle inverse de la nappe » car ce sont les mesures des différentes nappes qu'on fusionne. Si un seul capteur est utilisé pour acquérir plusieurs nappes, ce capteur unique est en fait équivalent à une pluralité de capteurs acquérant une nappe chacun, et ayant chacun son propre modèle inverse (même si tous ces modèles inverses peuvent être identiques).

Chaque bloc de traitement $CO_k$ reçoit donc en entrée les mesures correspondant à une nappe d'acquisition $z_k$ (références $z_1...z_{NC}$) respective, et fournit en sortie une grille d'occupation, sous la forme un vecteur d'entiers $g_k$ représentant les indices des classes de probabilités associées aux différentes cellules de la grille. Ainsi, la grille $g_k$ renferme les informations d'occupation estimées à l'aide des mesures de la nappe k uniquement, c'est-à-dire du vecteur

de mesures $z_k$.

Le bloc matériel de consolidation F comprend quatre circuits logiques combinatoires $F_1$, $F_2$, $F_3$ et $F_4$ mettant en oeuvre les équations (15), (16), (19) et (20) respectivement ; il reçoit à son entrée les grilles d'occupation $g_1...g_{NC}$ et fournit à sa sortie une grille d'occupation « consolidée », représentée à son tour par un vecteur d'entiers, indices des classes de probabilités associées aux différentes cellules de cette grille consolidée.

Comme cela a été expliqué plus haut, les équations (19) et (20) peuvent ne pas être mises en oeuvre ; ainsi les blocs $F_3$ et $F_4$ peuvent être absent, ou être remplacés par des circuits de gestion des conflits de détection, par exemple, mettant en oeuvre la règle exprimée par l'équation 21 (choix de la probabilité maximale).

Si les modèles inverses associés aux différentes nappes d'acquisition sont identiques, les blocs $CO_1 ... CO_{NC}$ sont aussi identiques, et peuvent être remplacés par un bloc matériel de calcul de probabilités d'occupation unique, effectuant les traitements de manière séquentielle.

Le module de traitement de données MTD1 peut aussi être associé à tout autre type de capteurs de distance.

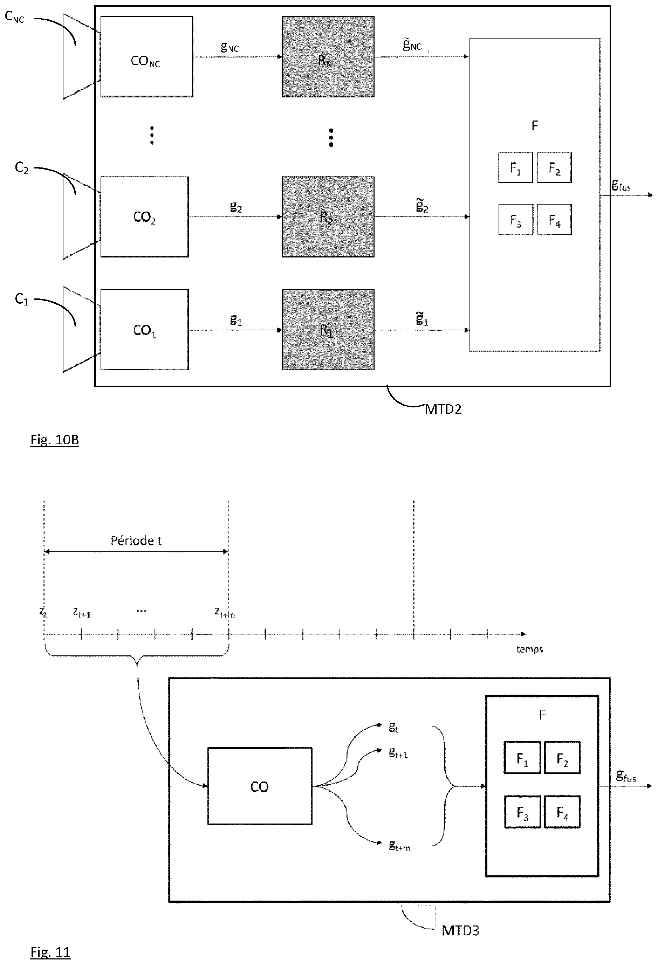

Les figures 10A et 10B se rapportent à un autre mode de réalisation de l'invention, utilisant plusieurs capteurs disposés à des emplacements différents qui coopèrent pour fournir une grille d'occupation construite à l'aide de mesures effectuées depuis différents points de vue. Les capteurs peuvent être hétérogènes technologiquement, en précision, portée, champ de vision et/ou rapidité d'acquisition. Dans ce mode de réalisation la distance du premier obstacle est une information relative au capteur qui fait la mesure. Un exemple schématique du scénario est représenté sur la figure 10A, montrant deux capteurs $C_1$ et $C_2$ placés à différentes positions et ayant des portées et des champs de vision différents. Ainsi l'obstacle O est vu à des distances complètement différentes par $C_1$ et $C_2$.

Dans ce mode de réalisation, la principale difficulté réside dans le fait que la grille d'occupation d'une part et les capteurs d'autres parts ont chacun un repère propre qui leur est associé. Ainsi, l'évaluation de l'emplacement des obstacles requiert d'effectuer des changements de repères.

La figure 10B illustre un système de perception d'obstacles selon un tel mode de réalisation de l'invention. Ce système comprend, de manière générale, « NC » capteurs non co-localisés et potentiellement hétérogènes $C_1$, $C_2$ ... $C_{NC}$ et un module de traitement de données MTD2. Ce dernier se différencie du module de traitement de données MTD1 de la figure 9B en ce qu'il comprend aussi, intercalés entre les blocs matériels de calcul de probabilités d'occupation $CO_1 ... CO_{NC}$ et le bloc matériel de consolidation F, de blocs de changement de repère $R_1 ... R_{NC}$. Chacun de ces blocs $R_k$ contient des unités de calcul, généralement en virgule flottante, pour effectuer le changement du repère d'un capteur respectif vers le repère de la grille d'occupation dite « de consolidation » par rapport à laquelle est effectuée la fusion des données. Le calcul effectué pour le changement de repère consiste à réaffecter l'occupation d'un emplacement connu dans le repère d'un capteur $C_k$ (exprimé par un vecteur d'entiers $g_k$) à la cellule correspondante dans le repère de la grille de consolidation. On représente par $\tilde{g}_1 ... \tilde{g}_{NC}$ les vecteurs d'entiers représentatifs des occupations des cellules de la grille de consolidation. Cette réaffectation suppose le calcul de translations, rotations, etc. Le traitement des blocs $R_k$ peut par exemple être réalisé en utilisant une unité arithmétique flottante d'un processeur embarqué (FPU : Floating Point Unit). Dans ce cas un même bloc matériel peut effectuer le calcul pour l'ensemble des blocs $R_k$ (traitement séquentiel).

En variante, les équations de changement de répère peuvent être mémorisées dans des tables de conversion stockées dans des mémoires contenues dans les modules $R_k$. Ainsi, même dans ce cas, on peut s'affranchir du calcul en virgule flottante et n'effectuer que des opérations sur des entiers. Par contre, ces tables de conversion peuvent être assez volumineuses et leur stockage avoir un coût non négligeable en termes de surface de silicium.

La figure 11 illustre un troisième mode de réalisation de l'invention dans lequel un capteur unique C, non représenté, acquiert des mesures scalaires ou vectorielles $z_t$, $z_{t+1}$, ...$z_{t+m}$... à une cadence d'acquisition N fois plus élevée de ce qui est requis pour une application déterminée. Un bloc matériel de calcul de probabilités d'occupation CO produit une grille d'occupation $g_t$, $g_{t+1}$, ...$g_{t+m}$... pour chacune de ces mesures. Puis un bloc matériel de fusion F fusionne N de ces grilles, acquises à des instants successifs, en une seule grille consolidée $g_{fus}$ ; les grilles d'occupation consolidées $g_{fus}$ sont donc générées à une cadence N fois moins élevée que la cadence d'application du capteur. Par exemple, si le capteur C fonctionne à une cadence de 100 Hz et une cadence de 10 Hz suffit pour l'application visée, on peut fusionner 10 acquisitions successives.

Dans les modes de réalisation des figures 9B, 10B et 11 on a considéré le cas où les traitements - ou au moins certains d'entre eux - sont réalisés par des blocs de calcul matériels, c'est-à-dire des circuits numériques dédiés. L'invention se prête cependant aussi à une mise en oeuvre totalement ou partiellement logicielle, dans laquelle les traitements - ou au moins certains d'entre eux - sont réalisés par un processeur générique programmé de manière opportune.

## Revendications

**1.** Procédé de perception de corps matériels (O) comportant les étapes suivantes, mises en oeuvre par un ordinateur ou un circuit électronique numérique dédié (MTD1, MTD2) :

a) Acquisition d'une pluralité de mesures de distance ($z_1 \ldots z_{NC}$) desdits corps matériels issues d'un ou plusieurs capteurs ($C_1 \ldots C_{NC}$) ;

b) Application, à chaque dite mesure de distance, d'un modèle inverse du capteur correspondant sur une grille d'occupation (GO) fournissant une représentation spatiale discrétisée d'un environnement dudit capteur, pour déterminer une probabilité d'occupation par un corps matériel d'un ensemble de cellules de ladite grille d'occupation ; et

c) Construction d'une grille d'occupation consolidée dont chaque cellule présente une probabilité d'occupation calculée par fusion des probabilités d'occupation de ladite cellule estimées lors de l'étape b) ;

dans lequel chaque dit modèle inverse de capteur est un modèle discret, associant à chaque cellule de la grille d'occupation correspondante, et pour chaque mesure de distance, une classe de probabilité choisie à l'intérieur d'un même ensemble de cardinalité finie, chaque dite classe de probabilité étant identifiée par un indice entier ; **caractérisé en ce que**, lors de ladite étape c), la probabilité d'occupation de chaque cellule de la grille d'occupation consolidée est déterminée au moyen de calculs entiers effectués sur les indices des classes de probabilités déterminées lors de ladite étape b) ; et **en ce que**

ledit ensemble de cardinalité finie de classes de probabilité est choisi parmi :

- l'union, désignée par $S_k$, de deux sous-ensembles $S_k^-$ et $S_k^+$ définis par :

$$S_k^- = \left\{ p_n = \frac{1}{2 - k \cdot n}, n \leq 0 \right\}$$

$$S_k^+ = \left\{ p_n = \frac{k \cdot n + 1}{k \cdot n + 2}, n \geq 0 \right\}$$

l'indice n prenant des valeurs entières relatives et le paramètre k étant un entier relatif non nul, auquel cas, lors de ladite étape c), la fusion $F(p_i, p_j)$ entre deux classes de probabilités $p_i, p_j \in S_k$ est calculée par application des équations suivantes :

- $F(p_i, p_j) = p_{i+j-k \cdot i \cdot j}$ si $i, j < 0$ ;

- $F(p_i, p_j) = p_{i+j+k \cdot i \cdot j}$ si $i, j > 0$.

- $F(p_i, p_j) = p_{(i+j) \div (1 + k \cdot j)}$ si $i < 0$, $j > 0$ et $|i| \geq |j|$ ;

- $F(p_i, p_j) = p_{(i+j) \div (1 - k \cdot i)}$ si $i < 0$, $j > 0$ et $|i| \leq |j|$.

où le symbole $\div$ désigne une division entière ; et

- l'union, désignée par $G_p$, de deux sous-ensembles $G_p^-$ et $G_p^+$ définis par :

$$G_p^- = \{(p_n), n \leq 0\}$$

$$G_p^+ = \{(p_n), n \geq 0\}$$

l'indice n prenant des valeurs entières relatives, p étant un paramètre de valeur strictement comprise entre 0,5 et 1 et les probabilité $p_n$ étant définies par récursion de la manière suivante :

$$p_0 = 0{,}5 \text{ ;}$$

$$p_1 = p \text{ ;}$$

$$p_{n+1} = F(p_n, p) = \frac{p_n p}{p_n p + (1 - p_n)(1 - p)} \quad \forall n > 1$$

$$p_{-1} = 1 - p \text{ ;}$$

$$p_{n-1} = F(p_n, p_{-1}) = \frac{p_n p_{-1}}{p_n p_{-1} + (1 - p_n)(1 - p_{-1})} \quad \forall n < -1$$

auquel cas, lors de ladite étape c), la fusion $F(p_i, p_j)$ entre deux classes de probabilités $p_i, p_j \in G_p$ est calculée par application de l'équation suivante :

$$F\ (p_i, p_j) = p_{i+j}$$

$$F(p_1, p_2) = \frac{p_1 p_2}{p_1 p_2 + (1 - p_1)(1 - p_2)}$$

2. Procédé selon la revendication 1 dans lequel ledit ensemble de cardinalité finie de classes de probabilité est $S_k$ avec k=1.

3. Procédé selon l'une des revendications précédentes dans lequel ladite étape c) comprend la mise en oeuvre de changements de repère pour construire ladite grille d'occupation consolidée à partir de probabilités d'occupation de cellules de grilles d'occupation associées à des capteurs non co-localisés.

4. Procédé selon l'une des revendications précédentes comportant également une étape préliminaire de construction des modèles inverses d'au moins un dit capteur sur la grille d'occupation correspondante, mise en oeuvre par application de l'équation suivante :

$$P(o_i|z) = \frac{\sum_{k=0}^{i-1} \frac{p(z|x_k)}{2^{k+1}} + \frac{p(z|x_i)}{2^i}}{\sum_{k=0}^{N-1} \frac{p(z|x_k)}{2^k}}$$

où :

• $P(o_i|z)$ représente la probabilité d'occupation de la cellule d'indice « i » de la grille d'occupation, lesdites cellules étant ordonnées par distance croissante dudit capteur ;
• N est le nombre de cellules de ladite grille d'occupation ;
• z représente une mesure de distance issue du capteur ; et
• $p(z|x_k)$ représente le modèle direct du capteur, exprimant la densité de probabilité de la mesure « z » fournie par le capteur lorsque la position $x_k$ de la cellule k de la grille d'occupation, mais aucune autre cellule plus proche du capteur, est occupée par un corps matériel.

5. Procédé selon l'une des revendications précédentes comportant également une étape préliminaire de détermination d'une résolution spatiale d'au moins une dite grille d'occupation, ladite résolution spatiale étant choisie telle que $\max[P(o_i|z_k)] \geq p_{min}$, où $P(o_i|z_k)$ est le modèle inverse du capteur et $p_{min}$ est la plus petite classe de probabilité appartenant audit ensemble et supérieure à 0,5.

6. Système de perception de corps matériels comprenant :

   - au moins un port d'entrée pour recevoir une pluralité de signaux ($z_1$, ..., $z_{NC}$) représentatifs de mesures de distance desdits corps matériels issues d'un ou plusieurs capteurs ;
   - un module de traitement de données (MTD1, MTD2) configuré pour recevoir en entrée lesdits signaux et les utiliser pour construire une grille d'occupation consolidée en appliquant un procédé selon l'une des revendications 1 à 5 ; et
   - au moins un port de sortie pour un signal ($g_{fus}$) représentatif de ladite grille d'occupation consolidée.

7. Système selon la revendication 6 comprenant également un ou plusieurs capteurs de distance ($C_1$, ..., $C_{NC}$) adaptés pour générer des signaux représentatifs d'une pluralité de mesures de distance desdits corps matériels et reliés audit ou auxdits ports d'entrée.

8. Système selon l'une des revendications 6 ou 7 dans lequel ledit module de traitement de données comprend au moins un bloc matériel de calcul de probabilités d'occupation ($CO_1 ... CO_{nNC}$) comprenant une mémoire stockant, sous la forme d'une table de correspondance, un modèle inverse d'un capteur associant à chaque mesure de distance un vecteur d'entiers représentant des indices de classes de probabilité associées à des cellules respectives d'une grille d'occupation.

9. Système selon l'une des revendications 6 à 8 dans lequel ledit module de traitement de données comprend un bloc matériel de calcul entier, dit de consolidation (F), configuré pour recevoir en entrée une pluralité d'entiers représentant des indices de classes de probabilité associées à des cellules de grilles d'occupation respectives, et pour calculer un indice d'une classe de probabilité associée à une cellule de ladite grille d'occupation consolidée.

10. Système selon la revendication 9 lorsqu'elle dépend de la revendication 8 dans lequel ledit module de traitement de données comprend aussi au moins un bloc de calcul, dit de changement de repère ($R_1$, ..., $R_{NC}$), configuré pour :

    - recevoir en entrée au moins un premier vecteur d'entiers, issu d'un bloc matériel de calcul de probabilités d'occupation correspondant et représentant des indices de classes de probabilité associées à des cellules respectives d'une grille d'occupation ;
    - le convertir en un second vecteur d'entiers représentant des indices de classes de probabilité associées à des cellules respectives d'une autre grille d'occupation, coïncidant spatialement avec ladite grille d'occupation consolidée ; et
    - fournir ledit second vecteur d'entier en entrée dudit bloc matériel de consolidation.

11. Système selon l'une des revendications 6 ou 7 dans lequel ledit module de traitement de données est configuré pour recevoir en entrée des signaux ($z_1$, ..., $z_{NC}$) représentatifs de mesures de distance acquises successivement par un même capteur ou des capteurs co-localisés et pour construire une grille d'occupation consolidée à partir d'une pluralité de ces signaux, correspondant à des instants d'acquisition successifs.

**Patentansprüche**

1. Verfahren zum Wahrnehmen materieller Körper (O), das die folgenden von einem Computer oder einer dedizierten digitalen elektronischen Schaltung (MTD1, MTD2) ausgeführten Schritte aufweist:

   a) Erfassen einer Vielzahl von von einem oder mehreren Sensoren ($C_1 ... C_{NC}$) stammenden Entfernungsmesswerten ($z_1 ... z_{NC}$) der materiellen Körper;
   b) Anwenden, auf jeden Entfernungsmesswert, eines inversen Modells des entsprechenden Sensors auf ein Belegungsgitter (GO), das eine diskretisierte räumliche Darstellung einer Umgebung des Sensors bereitstellt, um eine Wahrscheinlichkeit der Belegung eines Satzes von Zellen des Belegungsgitters durch einen materiellen Körper zu bestimmen; und

c) Konstruieren eines konsolidierten Belegungsgitters, bei dem jede Zelle eine Belegungswahrscheinlichkeit aufweist, die durch Zusammenführen der in Schritt b) geschätzten Belegungswahrscheinlichkeiten der Zelle berechnet wird;

wobei jedes sogenannte inverse Sensormodell ein diskretes Modell ist, das mit jeder Zelle des entsprechenden Belegungsgitters, und für jeden Entfernungsmesswert, eine Wahrscheinlichkeitsklasse assoziiert, die aus einem gleichen Satz endlicher Kardinalität ausgewählt wird, wobei jede Wahrscheinlichkeitsklasse durch einen ganzzahligen Index identifiziert wird;

**dadurch gekennzeichnet, dass** in Schritt c) die Wahrscheinlichkeit der Belegung jeder Zelle des konsolidierten Belegungsgitters mittels ganzzahliger Berechnungen der Indizes der in Schritt b) bestimmten Wahrscheinlichkeitsklassen bestimmt wird; und dadurch, dass

der Satz endlicher Kardinalität von Wahrscheinlichkeitsklassen ausgewählt ist aus:

- der Vereinigung, bezeichnet als $S_k$, von zwei Teilmengen $S_k^-$ und $S_k^+$, definiert durch :

$$S_k^- = \left\{ p_n = \frac{1}{2 - k \cdot n}, n \leq 0 \right\}$$

$$S_k^+ = \left\{ p_n = \frac{k \cdot n + 1}{k \cdot n + 2}, n \geq 0 \right\}$$

wobei der Index n relative Ganzzahlwerte annimmt und der Parameter keine relative ganze Zahl ungleich Null ist, wobei in diesem Fall in Schritt c) die Zusammenführung $F(p_i, p_j)$ zwischen zwei Wahrscheinlichkeitsklassen $p_i, p_j \in S_k$ durch Anwenden der folgenden Gleichungen berechnet wird:

- 

$$F(p_i, p_j) = p_{i+j-k \cdot i \cdot j} \text{ wenn } i, j < 0;$$

- 

$$F(p_i, p_j) = p_{i+j+k \cdot i \cdot j} \text{ wenn } i, j > 0.$$

- 

$$F(p_i, p_j) = p_{(i+j) \div (1+k \cdot j)} \text{ wenn } i < 0, j > 0 \text{ und } |i| \geq |j|;$$

- 

$$F(p_i, p_j) = p_{(i+j) \div (1-k \cdot i)} \text{ wenn } i < 0, j > 0 \text{ und } |i| \leq |j|.$$

wobei das Symbol $\div$ eine ganzzahlige Division bezeichnet; und

- der Vereinigung, mit $G_p$ bezeichnet, von zwei Teilmengen $G_p^-$ und $G_p^+$, definiert durch:

$$G_p^- = \{(p_n), n \leq 0\}$$

$$G_p^+ = \{(p_n), n \geq 0\}$$

wobei der Index n relative ganzzahlige Werte annimmt, wobei p ein Parameter mit einem Wert strikt zwischen 0,5 und 1 ist und die Wahrscheinlichkeit $p_n$ durch Rekursion wie folgt definiert wird:

$$p_0 = 0,5;$$

$$p_1 = p;$$

$$p_{n+1} = F(p_n, p) = \frac{p_n p}{p_n p + (1 - p_n)(1 - p)} \quad \forall n > 1$$

$$p_{-1} = 1 - p;$$

$$p_{n-1} = F(p_n, p_{-1}) = \frac{p_n p_{-1}}{p_n p_{-1} + (1 - p_n)(1 - p_{-1})} \quad \forall n < -1$$

in welchem Fall in Schritt c) die Vereinigung $F(p_i, p_j)$ zwischen zwei Wahrscheinlichkeitsklassen $p_i$, $p_j \in G_p$ durch Anwenden der folgenden Gleichung berechnet wird:

$$F(p_i, p_j) = p_{i+j}$$

$$F(p_1, p_2) = \frac{p_1 p_2}{p_1 p_2 + (1 - p_1)(1 - p_2)}.$$

2. Verfahren nach Anspruch 1, wobei der Satz von endlicher Kardinalität von Wahrscheinlichkeitsklassen $S_k$ mit k=1 ist.

3. Verfahren nach einem der vorherigen Ansprüche, wobei Schritt c) das Durchführen von Bezugssystemänderungen zum Konstruieren des konsolidierten Belegungsgitters auf der Basis von Belegungswahrscheinlichkeiten von mit nicht kolokalisierten Sensoren assoziierten Belegungsgitterzellen umfasst.

4. Verfahren nach einem der vorhergehenden Ansprüche, das auch einen Vorabschritt des Konstruierens der inversen Modelle von mindestens einem Sensor auf dem entsprechenden Belegungsgitter aufweist, der durch Anwenden der folgenden Gleichung implementiert wird:

$$P(o_i | z) = \frac{\sum_{k=0}^{i-1} \frac{p(z | x_k)}{2^{k+1}} + \frac{p(z | x_i)}{2^i}}{\sum_{k=0}^{N-1} \frac{p(z | x_k)}{2^k}}$$

wobei:

- $P(o_i | z)$ die Wahrscheinlichkeit der Belegung der Zelle mit Index "i" des Belegungsgitters darstellt, wobei die Zellen nach zunehmender Entfernung von dem Sensor geordnet sind;
- N die Anzahl der Zellen des Belegungsgitters ist;
- z einen Entfernungsmesswert vom Sensor darstellt; und
- $p(z | x_k)$ das direkte Modell des Sensors darstellt, das die Wahrscheinlichkeitsdichte des vom Sensor gelieferten Messwerts "z" ausdrückt, wenn die Position $x_k$ der Zelle k des Belegungsgitters, aber keine andere, näher am Sensor liegende Zelle von einem materiellen Körper belegt ist.

5. Verfahren nach einem der vorhergehenden Ansprüche, das auch einen Vorabschritt des Bestimmens einer räumlichen Auflösung von mindestens einem genannten Belegungsgitter aufweist, wobei die räumliche Auflösung so gewählt wird, dass $\max[P(o_i|z_k)] \geq p_{min}$, wobei $P(o_i|z_k)$ das inverse Modell des Sensors ist und $p_{min}$ die kleinste Wahrscheinlichkeitsklasse ist, die zu dem Satz gehört und größer als 0,5 ist.

6. System zum Wahrnehmen von materiellen Körpern, das Folgendes umfasst:

   - mindestens einen Eingangsport zum Empfangen einer Vielzahl von Signalen ($z_1$, ..., $z_{NC}$), die für von einem oder mehreren Sensoren stammende Entfernungsmesswerte der materiellen Körper repräsentativ sind;
   - ein Datenverarbeitungsmodul (MTD1, MTD2), konfiguriert zum Empfangen der Signale als Eingang und zum Verwenden derselben zum Konstruieren eines konsolidierten Belegungsgitters durch Anwenden eines Verfahrens nach einem der Ansprüche 1 bis 5; und
   - mindestens einen Ausgangsport für ein Signal ($g_{fus}$), das für das konsolidierte Belegungsgitter repräsentativ ist.

7. System nach Anspruch 6, das auch einen oder mehrere Entfernungssensoren ($C_1$, ..., $C_{NC}$) umfasst, ausgelegt zum Erzeugen von Signalen, die für eine Vielzahl von Entfernungsmesswerten der materiellen Körper repräsentativ und mit den ein oder mehreren Eingangsports verbunden sind.

8. System nach Anspruch 6 oder 7, wobei das Datenverarbeitungsmodul mindestens einen Hardware-Block zum Berechnen von Belegungswahrscheinlichkeiten ($CO_1$, ..., $CO_{nNC}$) umfasst, der einen Speicher umfasst, der in Form einer Korrelationstabelle ein inverses Modell eines Sensors speichert, der mit jedem Entfernungsmesswert einen Ganzzahlenvektor assoziiert, der Indizes von Wahrscheinlichkeitsklassen darstellt, die mit jeweiligen Zellen eines Belegungsgitters assoziiert sind.

9. System nach einem der Ansprüche 6 bis 8, wobei das Datenverarbeitungsmodul einen ganzzahligen, sogenannten Konsolidierungs-Hardware-Block (F) umfasst, konfiguriert zum Empfangen eine Vielzahl von ganzen Zahlen als Eingang, die Indizes von Wahrscheinlichkeitsklassen darstellen, die mit Zellen jeweiliger Belegungsgitter assoziiert sind, und zum Berechnen eines Index einer mit einer Zelle des konsolidierten Belegungsgitters assoziierten Wahrscheinlichkeitsklasse.

10. System nach Anspruch 9 in Abhängigkeit von Anspruch 8, wobei das Datenverarbeitungsmodul auch mindestens einen zum Referenzsystemwechsel ($R_1$, ..., $R_{NC}$) genannten Berechnungsblock umfasst, konfiguriert zum:

    - Empfangen mindestens eines ersten Ganzzahlenvektors als Eingang, der aus einem entsprechenden Hardware-Block zur Berechnung von Belegungswahrscheinlichkeiten stammt und Indizes von Wahrscheinlichkeitsklassen darstellt, die mit jeweiligen Zellen eines Belegungsgitters assoziiert sind;
    - Umwandeln desselben in einen zweiten Ganzzahlenvektor, der Indizes von Wahrscheinlichkeitsklassen darstellt, die mit jeweiligen Zellen eines anderen Belegungsgitters assoziiert sind, das räumlich mit dem konsolidierten Belegungsgitter übereinstimmt; und
    - Bereitstellen des zweiten Ganzzahlvektors als Eingang für den Konsolidierungs-Hardware-Block.

11. System nach Anspruch 6 oder 7, wobei das Datenverarbeitungsmodul zum Empfangen, als Eingang, von Signalen ($z_1$, ..., $z_{NC}$), die für Entfernungsmesswerte repräsentativ sind, die nacheinander von demselben Sensor oder von kolokalisierten Sensoren erfasst wurden, und zum Konstruieren eines konsolidierten Belegungsgitters auf der Basis von einer Vielzahl dieser Signale entsprechend aufeinanderfolgenden Erfassungszeitpunkten konfiguriert ist.

**Claims**

1. A method for perceiving physical bodies (O) having the following steps, implemented by a computer or a dedicated digital electronic circuit (MTD1, MTD2):

   a) acquisition of a plurality of distance measurements ($z_1$ ... $z_{NC}$) of said physical bodies, arising from one or more sensors ($C_1$ ... $C_{NC}$);
   b) application, to each said distance measurement, of an inverse model of the corresponding sensor on an occupancy grid (GO) providing a discretised spatial representation of an environment of said sensor, so as to determine a probability of occupancy by a physical body of a set of cells of said occupancy grid; and
   c) construction of a consolidated occupancy grid, each cell of which has an occupancy probability computed by fusing the occupancy probabilities of said cell, estimated during step b);

wherein each said inverse sensor model is a discrete model, associating with each cell of the corresponding occupancy grid, and for each distance measurement, a probability class chosen inside one and the same set of finite cardinality, each said probability class being identified by an integer index;

**characterised in that**, during said step c), the probability of occupancy of each cell of the consolidated occupancy grid is determined by means of integer computations performed on the indices of the probability classes determined during said step b); and **in that**

said set of finite cardinality of probability classes is chosen from:

- the union, designated by $S_k$, of two subsets $S_k^-$ and $S_k^+$ defined by:

$$S_k^- = \left\{ p_n = \frac{1}{2 - k \cdot n}, n \leq 0 \right\}$$

$$S_k^+ = \left\{ p_n = \frac{k \cdot n + 1}{k \cdot n + 2}, n \geq 0 \right\}$$

the index n taking relative integer values and the parameter k being a non-zero relative integer, and in which case, during said step c), the fusion $F(p_i, p_j)$ between two probability classes $p_i, p_j \in S_k$ is computed by applying the following equations:

- 

$$F(p_i, p_j) = p_{i+j-k \cdot i \cdot j} \text{ if } i, j < 0;$$

- 

$$F(p_i, p_j) = p_{i+j+k \cdot i \cdot j} \text{ if } i, j > 0.$$

- 

$$F(p_i, p_j) = p_{(i+j) \div (1 + k \cdot j)} \text{ if } i < 0, j > 0 \text{ and } |i| \geq |j|;$$

- 

$$F(p_i, p_j) = p_{(i+j) \div (1 - k \cdot i)} \text{ if } i < 0, j > 0 \text{ and } |i| \leq |j|.$$

where the symbol $\div$ designates an integer division; and

- the union, designated by $G_p$, of two subsets $G_p^-$ and $G_p^+$ defined by:

$$G_p^- = \{(p_n), n \leq 0\}$$

$$G_p^+ = \{(p_n), n \geq 0\}$$

the index n taking relative integer values, p being a parameter of value lying strictly between 0.5 and 1 and the probability $p_n$ being defined by recursion in the following manner:

$$p_0 = 0.5;$$

$$p_1 = p;$$

$$p_{n+1} = F(p_n, p) = \frac{p_n p}{p_n p + (1 - p_n)(1 - p)} \quad \forall n > 1$$

$$p_{-1} = 1 - p;$$

$$p_{n-1} = F(p_n, p_{-1}) = \frac{p_n p_{-1}}{p_n p_{-1} + (1 - p_n)(1 - p_{-1})} \quad \forall n < -1$$

in which case, during said step c), the fusion $F(p_i, p_j)$ between two probability classes $p_i, p_j \in G_p$ is computed by applying the following equation:

$$F(p_i, p_j) = p_{i+j}$$

$$F(p_1, p_2) = \frac{p_1 p_2}{p_1 p_2 + (1 - p_1)(1 - p_2)}.$$

2. The method according to claim 1, wherein said set of finite cardinality of probability classes is $S_k$, with k=1.

3. The method according to one of the preceding claims, wherein said step c) comprises the implementation of changes of frame to construct said consolidated occupancy grid on the basis of probabilities of occupancy of cells of occupancy grids associated with non-co-located sensors.

4. The method according to one of the preceding claims, also having a preliminary step of constructing the inverse models of at least one said sensor on the corresponding occupancy grid, implemented by applying the following equation:

$$P(o_i | z) = \frac{\sum_{k=0}^{i-1} \frac{p(z|x_k)}{2^{k+1}} + \frac{p(z|x_i)}{2^i}}{\sum_{k=0}^{N-1} \frac{p(z|x_k)}{2^k}}$$

where:

• $P(o_i|z)$ represents the probability of occupancy of the cell of index "i" of the occupancy grid, said cells being ordered by increasing distance from said sensor;
• N is the number of cells of said occupancy grid;
• z represents a distance measurement arising from the sensor; and
• $p(z|x_k)$ represents the direct model of the sensor, expressing the probability density of the measurement "z" provided by the sensor when the position $x_k$ of the cell k of the occupancy grid, but no other cell closer to the sensor, is occupied by a physical body.

5. The method according to one of the preceding claims, also having a preliminary step of determining a spatial resolution of at least one said occupancy grid, said spatial resolution being chosen such that $\max[P(o_i|z_k)] \geq p_{min}$, where $P(o_i|z_k)$ is the inverse model of the sensor and $p_{min}$ is the smallest probability class belonging to said set and greater than 0.5.

6. A system for perceiving physical bodies comprising:

- at least one input port for receiving a plurality of signals ($z_1$, ..., $z_{NC}$) representative of distance measurements of said physical bodies, arising from one or more sensors;
- a data processing module (MTD1, MTD2) configured to receive as input said signals and to use them to construct a consolidated occupancy grid by applying a method according to one of claims 1 to 5; and
- at least one output port for a signal ($g_{fus}$) representative of said consolidated occupancy grid.

7. The system according to claim 6, also comprising one or more distance sensors ($C_1$, ..., $C_{NC}$) adapted to generate signals representative of a plurality of distance measurements of said physical bodies and linked to said input port or ports.

8. The system according to one of claim 6 or 7, wherein said data processing module comprises at least one hardware block for computing occupancy probabilities ($CO_1$, ..., $CO_{nNC}$) comprising a memory storing, in the form of a correspondence table, an inverse model of a sensor associating with each distance measurement a vector of integers representing indices of probability classes associated with respective cells of an occupancy grid.

9. The system according to one of claims 6 to 8, wherein said data processing module comprises a hardware block for integer computation, for so-called consolidation (F), configured to receive as input a plurality of integers representing indices of probability classes associated with cells of respective occupancy grids, and to compute an index of a probability class associated with a cell of said consolidated occupancy grid.

10. The system according to claim 9 when dependant on claim 8, wherein said data processing module also comprises at least one computation block, for so-called change of frame ($R_1$, ..., $R_{NC}$), configured to:

   - receive as input at least one first vector of integers, arising from a corresponding hardware block for computing occupancy probabilities and representing indices of probability classes associated with respective cells of an occupancy grid;
   - convert it into a second vector of integers representing indices of probability classes associated with respective cells of another occupancy grid, coinciding spatially with said consolidated occupancy grid; and
   - provide said second integer vector as input to said consolidation hardware block.

11. The system according to one of claim 6 or 7, wherein said data processing module is configured to receive as input signals ($z_1$, ..., $z_{NC}$) representative of distance measurements acquired successively by one and the same sensor or co-located sensors and to construct a consolidated occupancy grid from a plurality of these signals, corresponding to successive acquisition instants.

## p(z|d)

Fig. 1

Fig. 2

## P(o|z)

Fig. 3

## P(o|z)

Fig. 4

0               k          i             N-1

Fig. 5A

0               k,i             N-1

Fig. 5B

0               k          i             N-1

Fig. 5C

0               i          k             N-1

Fig. 5D

Fig. 6A

Fig. 6B

Fig. 6C

Fig. 6D

Fig. 7A

Fig. 7B

P(o|z)

Fig. 8

Fig. 9A

Fig. 9B

Fig. 10A

Fig. 10B

Fig. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014035775 A
- FR 2006050860
- DE 102009007395

**Littérature non-brevet citée dans la description**

- **A. ELFES.** Occupancy grids: a stochastic spatial représentation for active robot perception. *Sixth Conférence on Uncertainty in AI,* 1990
- **K. KONOLIGE.** Improved occupancy grids for map building. *Autonomous Robots,* 1997, vol. 4, 351-367
- **J. ADARVE et al.** Computing occupancy grids from multiple sensors using linear opinion pools. *Proceedings - IEEE International Conférence on Robotics and Automation,* 2012
- **T. RAKOTOVAO et al.** Real-time power-efficient intégration of multi-sensor occupancy grid on many core. *2015 International Workshop on Advanced Robotics and its Social Impact,* 30 Juin 2015
- **PRABHAKAR et al.** Recursive Goal Seeking Algorithm for reactive navigation in autonomous rover systems. *2015 IEEE International Workshop on Advanced Robotics and Its Social Impacts,* 30 Juin 2015